# EUROPÄISCHE PATENTANMELDUNG

(11) **EP 2 992 989 A1**
(43) Veröffentlichungstag der Anmeldung: **09.03.2016**
(21) Anmeldenummer: 15180333.5
(22) Anmeldetag: 10.08.2015
(51) Int. Cl.: B23B 31/26

(54) **SPANNVORRICHTUNG**

(30) Priorität: 03.09.2014 DE 202014104118 U
(71) Anmelder: Narr Beteiligungs GmbH, 73230 Kirchheim/Teck (DE)
(72) Erfinder: Langbein, Ulrich, 70329 Stuttgart (DE); Brosowsky, Paul, 73066 Uhingen (DE)
(74) Vertreter: Ruckh, Rainer Gerhard

(57) **Zusammenfassung**

Die Erfindung betrifft eine Spannvorrichtung (1), die zum Spannen eines Werkzeugs (19) dient. Die Spannvorrichtung (1) umfasst eine mechanische Spanneinheit (2), mittels derer das Werkzeug (19) in einer Spannstellung gespannt ist. Weiter weist die Spannvorrichtung (1) eine einen elektrischen Antrieb aufweisende Antriebseinheit (3) auf, mittels derer ein Lösen und Schließen der Spanneinheit (2) erfolgt. Das Werkzeug (19) ist in der Spannstellung durch formschlüssig verriegelnde Verriegelungsmittel gesichert.

## Beschreibung

Die Erfindung betrifft eine Spannvorrichtung zum Spannen eines Werkzeugs.

Eine derartige Spannvorrichtung ist aus der DE 101 01 093 A1 bekannt. Diese Spannvorrichtung umfasst eine rotierend antreibbare Spindel zur Betätigung einer Spanneinheit und eine Betätigungseinrichtung für die Betätigungsstange. Die Betätigungseinrichtung ist relativ zur umlaufenden Spindel nicht rotierend angeordnet und der ebenfalls spindelsynchron rotierenden Betätigungsstange über eine Kupplungseinrichtung gekuppelt, die einerseits eine Trennung zwischen der rotierenden Betätigungsstange und der nicht rotierenden Betätigungseinrichtung und andererseits zugleich eine Kopplung zwischen diesen beiden Bauteilen schafft. Die Betätigungseinrichtung ist aus einer mit der Betätigungsstange gekoppelten Spindeleinheit gebildet, die einen Antriebsmotor, insbesondere Elektromotor, und ein durch ihn angetriebenes, eine Drehbewegung in eine Translationsbewegung umwandelndes Untersetzungsgetriebe aufweist, das auf eine als Hülse oder Welle ausgebildete Antriebsspindel arbeitet.

Bei dieser Spannvorrichtung wird kein Federspannsystem benötigt, um die zum Spannen eines Werkzeugs erforderliche Einzugskraft bereitzustellen.

Vorteilhaft hierbei ist, dass zum Spannen des Werkzeugs keine mechanischen Federn, die einem erhöhten Verschleiß unterworfen sind, benötigt werden. Allerdings ist es nicht oder nur mit hohem konstruktiven Aufwand möglich, mit dem elektrischen Antrieb alleine hinreichend große Einzugskräfte zum Spannen des Werkzeugs reproduzierbar zu erzeugen.

Ein weiteres Problem bei derartigen Spannvorrichtungen besteht darin, für eine hinreichend sichere Verriegelung der Spanneinheit zu sorgen, die gewährleistet, dass das Werkzeug in der Spannstellung der Spanneinheit sicher gelagert ist.

Der Erfindung liegt die Aufgabe zugrunde, eine Spannvorrichtung der eingangs genannten Art bereitzustellen, welche bei geringem konstruktiven Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Spannvorrichtung dient zum Spannen eines Werkzeugs und umfasst eine mechanische Spanneinheit, mittels derer das Werkzeug in einer Spannstellung gespannt ist, sowie eine einen elektrischen Antrieb aufweisende Antriebseinheit, mittels derer ein Lösen und Schließen der Spanneinheit erfolgt. Das Werkzeug ist in der Spannstellung durch formschlüssig verriegelnde Verriegelungsmittel gegen Lösen gesichert.

Ein wesentlicher Vorteil der Erfindung besteht darin, dass eine besonders mit dem erfindungsgemäßen Verriegelungsmittel sichere Verriegelung des Werkzeugs in der Spannstellung erzielt wird, was zu einer signifikanten Erhöhung der Betriebssicherheit der gesamten Spannvorrichtung führt.

Der Grundgedanke der Erfindung besteht dabei darin, bekannte Verriegelungsmechanismen, die einen Reibschluss von mechanischen Elementen basierend auf einer Selbsthemmung, vorsehen, durch formschlüssig verriegelnde Verriegelungsmittel zu ersetzen. Mit diesen formschlüssig verriegelnden Verriegelungsmitteln wird ohne nennenswerte Erhöhung des konstruktiven Aufwands der Spannvorrichtung die Sicherung des Werkzeugs in der Spanneinheit erheblich verbessert.

Die Verriegelungsmittel können von unterschiedlich ausgebildeten mechanischen Elementen, insbesondere Greifarmen oder dergleichen, gebildet sein, die an einem Anschlag einrasten und mit diesem einen Formschluss bilden, sobald sich die Spanneinheit in der Spannstellung befindet.

Gemäß einer besonders vorteilhaften Ausgestaltung sind die Verriegelungsmittel von Kugeln gebildet, die an einer beweglichen Komponente der Spanneinheit gelagert sind. Diese Kugeln werden entlang einer stationären Komponente der Spannvorrichtung zwangsgeführt, wenn die Spanneinheit zwischen Spannstellung und Lösestellung bewegt wird. Wird dann die Schließstellung erreicht, rasten die Kugeln an einem Anschlag ein und bilden mit diesem einen Formschluss.

Diese Kugeln stellen eine konstruktiv einfache und zudem verschleißarme Realisierung der Verriegelungsmittel dar.

Die erfindungsgemäße Spannvorrichtung umfasst eine mechanische Spanneinheit, wobei diese eine Federanordnung zur Erzeugung der Einzugskraft aufweist, mit der das Werkzeug in der Spanneinheit eingespannt ist. Mit dem Begriff Federanordnung sind generell ein oder mehrere Federn bzw. Federpakete umfasst.

Ein wesentlicher Aspekt der Erfindung besteht darin, dass die Feder als quasistatisches Element genutzt wird. Dies bedeutet, dass der Federweg, der von der Feder zurückgelegt wird, wenn ein Verfahren der Spanneinheit zwischen der Spannstellung und der Lösestellung beziehungsweise umgekehrt erfolgt, erheblich geringer ist, als der Hubweg von mechanischen Komponenten der Spanneinheit, die bei einem Verfahren zwischen der Spannstellung der und Lösestellung in axialer Richtung der Spannvorrichtung bewegt werden müssen. Im Gegensatz zu bekannten Spannvorrichtungen, bei welchen die Federanordnung als dynamisches Element derart genutzt wird, dass der Federweg im Wesentlichen dem gesamten Hubweg der beweglichen mechanischen Komponenten entspricht, ist die dynamische Belastung der Feder und die damit verbundene Verschleißgefahr praktisch vernachlässigbar.

Gemäß einer konstruktiv vorteilhaften Ausgestaltung der Erfindung weist die Spanneinheit eine in einer Spindelhülse axial verschiebbare Spannhülse auf. In der Spannhülse ist eine Federanordnung vorgesehen, mittels derer eine Einzugskraft zum Spannen des Werkzeugs erzeugt wird, wobei in Bohrungen, die an der äußeren Mantelfläche der Spannhülse ausmünden, Kugeln gelagert sind, welche die Verriegelungsmittel bilden. Bei Bewegen der Spannhülse sind zwischen einer Lösestellung und einer Spannstellung die äußere Mantelfläche der Spannhülse sowie die darin gelagerten Kugeln entlang der inneren Mantelfläche der Spindelhülse geführt. In der Spannstellung des Werkzeugs liegen die Kugeln in einer Verriegelungsstellung unter Ausbildung eines Formschlusses am Rand der Spindelhülse an.

Bei Bewegen der Spannhülse relativ zur Spindelhülse rollen die Kugeln auf der Mantelfläche der Spindelhülse ab, wodurch eine besonders reibungsarme Führung gewährleistet ist. Weiter ist vorteilhaft, dass der Rand der Spindelhülse selbst als Anschlag zur Ausbildung des Formschlusses mit den Kugeln genutzt werden kann, wodurch der konstruktive Aufwand der Anordnung gering gehalten werden kann.

Vorteilhaft ist eine mittels der Antriebseinheit axial bewegbare Buchse vorgesehen, wobei durch die Bewegung der Buchse die Spannhülse mitbewegt wird. In der Spannstellung drückt die Buchse die Kugeln in die Verriegelungsstellung.

Zweckmäßig ist in der Spannstellung die Position der Buchse durch die Federkraft einer Druckfeder gesichert.

Die Buchse sorgt somit, vorzugsweise mit Unterstützung durch die Druckfeder, dafür, dass die die Verriegelungsmittel bildenden Kugeln gegen ein unerwünschtes Ablösen von dem einen Anschlag bildenden Rand der Spindelhülse gesichert sind.

Weiter vorteilhaft wird bei Lösen aus der Spannstellung die Buchse mittels der Antriebseinheit in axialer Richtung gegen die Federkraft der Druckfeder verfahren, wodurch die Kugeln aus ihrer Verriegelungsstellung freigegeben werden.

Das Freigeben der Kugeln erfolgt dabei vorteilhaft selbsttätig, das heißt ohne weitere konstruktive Zusatzmittel. Zweckmäßig bildet dabei die Anlagefläche der Buchse an den Kugeln eine Schräge aus, so dass bei Herausbewegen der Buchse aus der Spannstellung die an dieser Schräge geführten Kugeln selbsttätig vom Rand der Spindelhülse gelöst werden.

Gemäß einer zweckmäßigen konstruktiven Ausgestaltung wird mit der Spannhülse eine Spannzange betätigt, wobei in der Spannstellung die Spannzange geschlossen ist und dadurch das Werkzeug in der Spanneinheit fixiert ist. In der Lösestellung ist die Spannzange geöffnet und dadurch das Werkzeug in der Spanneinheit gelöst. Die Spannzange ist in Eingriff mit einer Zugstange, die in Wirkverbindung mit einer das Werkzeug spannenden Spannpatrone steht.

Vorteilhaft wird dabei die Position der Zugstange mittels eines Sensors überwacht, wobei zweckmäßig der Sensor ein analoger Näherungsschalter ist.

Damit können die verschiedenen Stellungen der Spanneinheit exakt erfasst und überwacht werden. Insbesondere kann unterschieden werden, ob sich in der Spanneinheit ein Werkzeug befindet oder nicht. Weiter kann erfasst werden, ob das Werkzeug in der Spanneinheit gelöst ist. Schließlich können auch Fehlerzustände aufgedeckt werden, beispielsweise ob das Werkzeug außerhalb der erlaubten Toleranz ist oder ob die Zugstange von der Antriebseinheit entkoppelt ist.

Die Federanordnung besteht vorzugsweise aus einer Anordnung von Tellerfedern.

Die Federanordnung wird dabei nicht nur zur Erzeugung der Einstellkraft genutzt, sondern sorgt gleichzeitig für einen selbsttätigen Ausgleich gegen das Verschleißen mechanischer Komponenten. Somit muss beispielsweise die Position der Zugstange nicht separat überwacht werden.

Die Erfindung wird im Folgenden anhand der Zeichnungen erläutert. Es zeigen:
- Figur 1:: Ausführungsbeispiel der erfindungsgemäßen Spannvorrichtung.
- Figur 2:: Einzeldarstellung einer Spannhülse für die Spannvorrichtung gemäß Figur 1.
- Figur3:: Darstellung eines Ausschnitts der Spannvorrichtung im gespannten Zustand mit Werkzeug.
- Figur 4:: Darstellung eines Ausschnitts der Spannvorrichtung im gelösten Zustand mit Werkzeug.
- Figur 5:: Darstellung eines Ausschnitts der Spannvorrichtung im gespannten Zustand ohne Werkzeug.

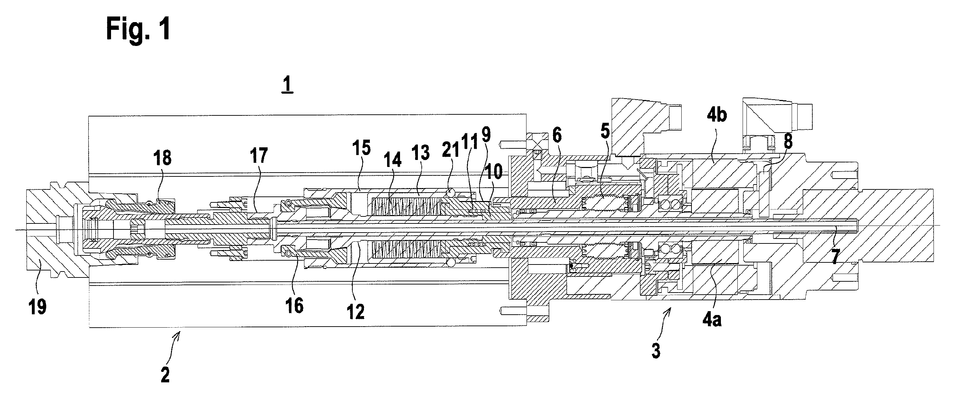

Figur 1 zeigt ein Ausführungsbeispiel der erfindungsgemäßen Spannvorrichtung 1. Die Spannvorrichtung 1 umfasst eine mechanische Spanneinheit 2 und eine Antriebseinheit 3 mit einem elektrischen Antrieb, der im vorliegenden Fall als Servomotor ausgebildet ist. Der elektrische Antrieb weist in bekannter Weise einen Rotor 4a und einen Stator 4b auf. Weiterhin ist eine Getriebeeinheit mit Wälzlagern 5 vorgesehen, die für eine Umsetzung der Rotationsbewegung des Antriebs in eine Linearbewegung einer Betätigungseinrichtung 6, insbesondere einer Spindel, sorgt. Im Zentrum der Antriebseinheit 3 verläuft ein Kühlmittelrohr 7, das sich bis in den Bereich der Spanneinheit 2 erstreckt. Insbesondere entlang der äußeren Mantelflächen des Kühlmittelrohrs 7 kann Sperrluft bis in den Bereich der Spanneinheit 2 zu Kühl- und Reinigungszwecken geführt werden. Als Sensor zur Erfüllung von Überwachungsfunktionen ist dem Kühlmittelrohr 7 ein analoger Näherungsschalter 8 zugeordnet, der im vorliegenden Fall von einem induktiven Näherungsschalter gebildet ist.

Die Betätigungseinrichtung 6 der Antriebseinheit 3 ist über einen Mitnehmer an eine Buchse 9 gekoppelt, die Bestandteil der Spanneinheit 2 ist. Die Linearbewegung der Betätigungseinrichtung 6 wird damit auf die Spanneinheit 2 übertragen. Die Buchse 9 umschließt eine Hülse 10. Zwischen Buchse 9 und Hülse 10 ist eine Druckfeder 11 vorgesehen.

Die Hülse 10 wiederum umschließt das eine Ende eines Spannbolzens 12. Der Spannbolzen 12, die Hülse 10 und die Buchse 9 sind teilweise in einer Spannhülse 13 geführt. Die Spannhülse 13 ist an der der Antriebseinheit 3 zugewandten Seite offen und an der gegenüberliegenden Seite geschlossen. An dieser geschlossenen Seite der Spannhülse 13 sitzen von Tellerfedern gebildete Federn 14 auf, die koaxial zur Symmetrieachse der Spannhülse 13 verlaufen und vollständig in dieser angeordnet ist. Die Spannhülse 13 ist in axialer Richtung verschiebbar in einer Spindelhülse 15 gelagert.

An das über die Spannhülse 13 hervorstehende Ende des Spannbolzens 12 sind Spannzangen 16 angekoppelt, die schwenkbar und verschiebbar an der Spindelhülse 15 gelagert sind. Die Spannzangen 16 sind in Eingriff mit einer Zugstange 17, die wiederum an Spannpatronen 18 der Spanneinheit 2 gekoppelt sind, mittels derer ein Werkzeug 19 fixiert wird.

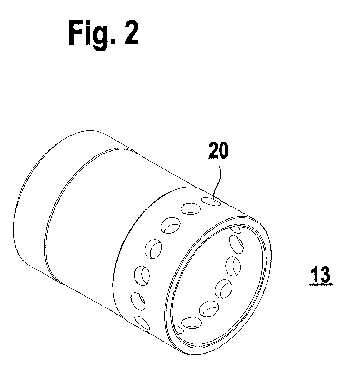

Figur 2 zeigt die Spannhülse 13 in einer Einzeldarstellung. Die Spannhülse 13 ist im Wesentlichen hohlzylindrisch ausgebildet und weist mehrere in Umfangsrichtung äquidistant zueinander angeordnete, identisch ausgebildete Bohrungen 20 auf. In diesen Bohrungen 20 werden ebenfalls identische, Verriegelungsmittel bildende Kugeln 21 eingesetzt, wie aus Figur 1 ersichtlich.

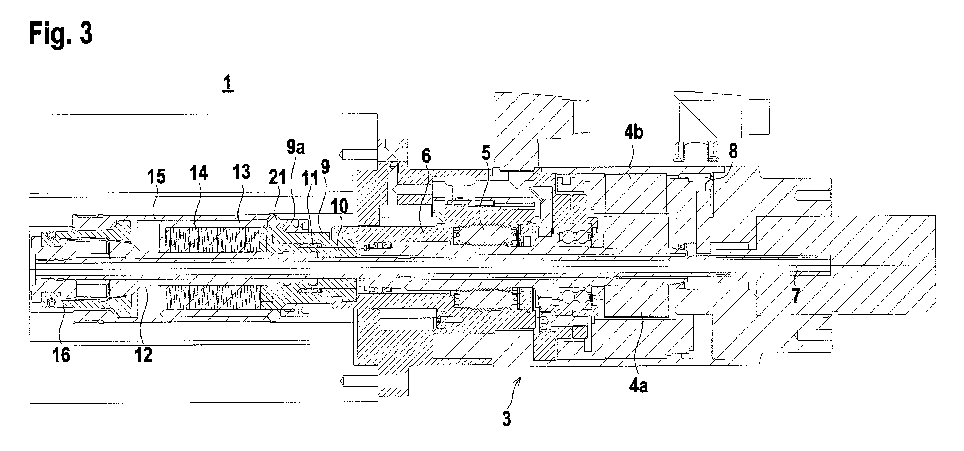

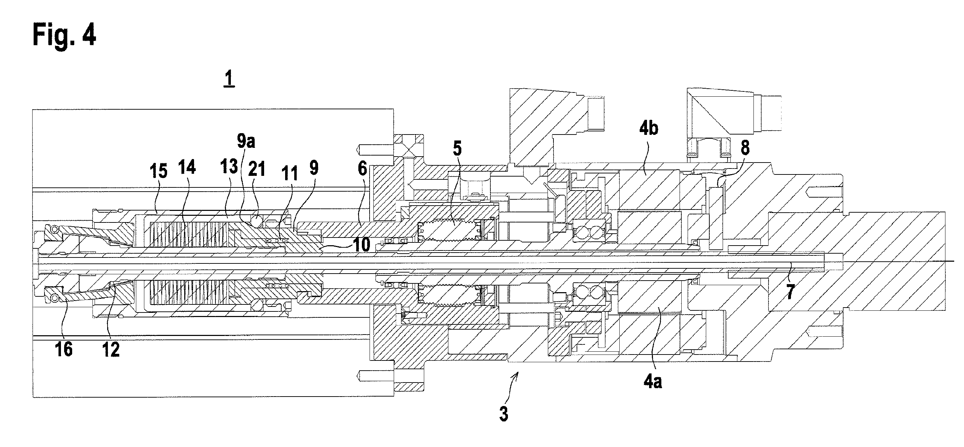

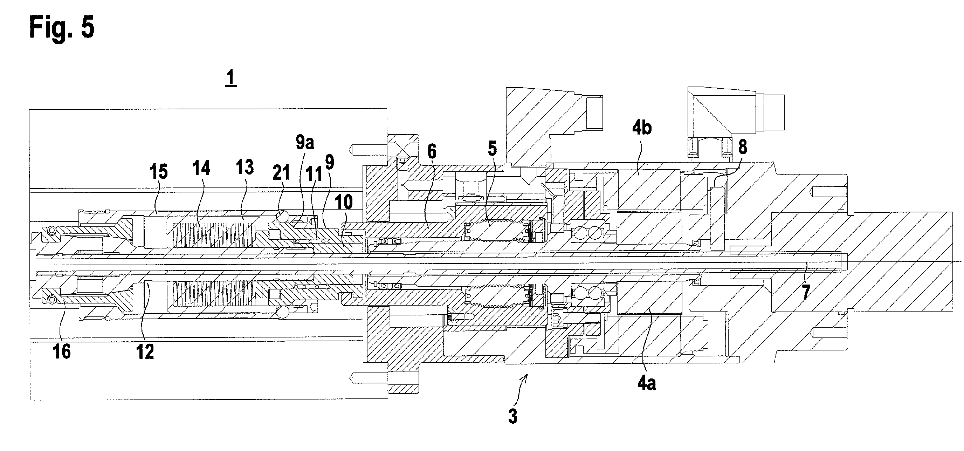

Die Funktion der Spannvorrichtung 1 wird im Folgenden anhand der Figuren 2 bis 5 erläutert. Dabei zeigt Figur 3 die Spannvorrichtung 1 im gespannten Zustand mit Werkzeug 19. Figur 4 zeigt die Spannvorrichtung 1 im gelösten Zustand. Figur 5 zeigt die Spannvorrichtung 1 im gespannten Zustand ohne Werkzeug 19.

Im gelösten Zustand der Spannvorrichtung 1 (Figur 4) befinden sich die Komponenten der Spanneinheit 2 jeweils in ihrer Lösestellung. Die Spannhülse 13 befindet sich dann in ihrer der Antriebseinheit 3 abgewandten Endposition und liegt somit komplett innerhalb der Spindelhülse 15. Die Kugeln 21 an der Spannhülse 13 liegen dann an der inneren Mantelfläche der Spindelhülse 15 an.

Der Spannbolzen 12 befindet sich ebenfalls in seiner der Antriebseinheit 3 abgewandten Endposition, wodurch die Spannzangen 16 geöffnet sind. Dies wird über die Zugstange 17 auf die Spannpatronen 18 übertragen, wodurch diese in ihre Lösestellung überführt sind und das Werkzeug 19 freigeben.

Die Federn 14 befinden sich in der Lösestellung unter Vorspannung und halten die angrenzenden Teile in ihren Positionen.

Zum Überführen der Spanneinheit 2 in die Spannstellung (Figur 3) zieht die Antriebseinheit 3 die Buchse 9 in deren Richtung. Das Kühlmittelrohr 7 wird mit der Buchse 9 mitbewegt. Die Spannhülse 13 wird dabei zunächst mitgezogen, wobei die Kugeln 21 in der Spannhülse 13 entlang der inneren Mantelfläche der Spindelhülse 15 gleiten. Sobald die Kugeln 21 der Spannhülse 13 aus der Spindelhülse 15 herausgeschoben werden, werden die Kugeln 21 durch eine 45-Grad-Schräge 9a der Buchse 9 nach außen gedrückt und rasten somit am Rand der Spindelhülse 15 ein. Damit ist die Spannstellung der Spanneinheit 2 (wie in Figur 3 dargestellt) erreicht. Die an dem Rand der Spindelhülse 15 eingerasteten Kugeln 21 bilden eine formschlüssige Verriegelung, die die Spannstellung der Spanneinheit 2 sichert. Die Kugeln 21 selbst sind durch die Buchse 9 und die Druckfeder 11 gegen ein Herauslösen vom Anschlag gesichert.

In der Spannstellung sind die Spannzangen 16 geschlossen, was über die Zugstange 17 auf die Spannpatronen 18 übertragen wird, die das Werkzeug 19 spannen.

In der Spannstellung befinden sich die Federn 14 unter einer erhöhten Vorspannung und üben somit eine Einzugskraft aus, die das Werkzeug 19 in der gespannten Stellung hält.

Die Federn 14 wirken beim Übergang zwischen Lösestellung und Spannstellung als quasistatisches Element, da deren Federweg beim Übergang von der Lösestellung in die Spannstellung mit ca. 2 mm erheblich kleiner ist als der Hubweg der Spannzange 16 mit ca. 6 mm. Entsprechendes gilt für die Hubwege der Buchse 9 und der Spannhülse 13.

Zur Überführung der Spannhülse 13 aus der Spannstellung (Figur 3) in die Lösestellung wird die Buchse 9 durch die Antriebseinheit 3 in Richtung des Werkzeugs 19 bewegt. Durch die 45-Grad-Schräge der Buchse 9 lösen sich dann die Kugeln 21 selbsttätig vom Anschlag und rollen dann entlang der Mantelfläche der Spindelhülse 15 bis die Lösestellung erreicht ist.

Wird, wie in Figur 5 dargestellt, die Spanneinheit 2 ohne Werkzeug 19 gespannt, so erfolgt der Spannvorgang analog zum Spannvorgang mit Werkzeug 19. Der einzige Unterschied ist, dass die Zugstange 17, die Buchse 9 und damit das Kühlmittelrohr 7 eine größere Hubbewegung ausführen als beim Spannen mit Werkzeug 19.

Durch den analogen Näherungsschalter 8, der Markierungen am Kühlmittelrohr 7 erfasst, können die unterschiedlichen Hubbewegungen des Kühlmittelrohrs 7 und damit der mechanischen Komponenten der Spanneinheit 2 quantitativ erfasst werden. Damit geben die Signale des analogen Näherungsschalters 8 Aufschluss, ob sich die Spanneinheit 2 in der Lösestellung oder im gespannten Zustand mit oder ohne Werkzeug 19 befindet.

### Bezugszeichenliste

(1) Spannvorrichtung
(2) Spanneinheit
(3) Antriebseinheit
(4a) Rotor
(4b) Stator
(5) Wälzlager
(6) Betätigungseinrichtung
(7) Kühlmittelrohr
(8) Näherungsschalter
(9) Buchse
(9a) 45-Grad-Schräge
(10) Hülse
(11) Druckfeder
(12) Spannbolzen
(13) Spannhülse
(14) Feder
(15) Spindelhülse
(16) Spannzange
(17) Zugstange
(18) Spannpatrone
(19) Werkzeug
(20) Bohrungen
(21) Kugel

## Patentansprüche

1. Spannvorrichtung (1) zum Spannen eines Werkzeugs (19), mit einer mechanischen Spanneinheit (2), mittels derer das Werkzeug (19) in einer Spannstellung gespannt ist, und mit einer einen elektrischen Antrieb aufweisenden Antriebseinheit (3), mittels derer ein Lösen und Schließen der Spanneinheit (2) erfolgt, **dadurch gekennzeichnet, dass** das Werkzeug (19) in der Spannstellung durch formschlüssig verriegelnde Verriegelungsmittel gesichert ist.

2. Spannvorrichtung nach Anspruch 1, **dadurch gekennzeichnet, dass** die Spanneinheit (2) eine in einer Spindelhülse (15) axial verschiebbare Spannhülse (13) aufweist, wobei in der Spannhülse (13) eine Federanordnung (14) vorgesehen ist, mittels derer eine Einzugskraft zum Spannen des Werkzeugs (19) erzeugt wird, und wobei in Bohrungen (20), die an der äußeren Mantelfläche der Spannhülse (13) ausmünden, Kugeln (21) gelagert sind, welche die Verriegelungsmittel bilden.

3. Spannvorrichtung nach Anspruch 2, **dadurch gekennzeichnet, dass** bei Bewegen der Spannhülse (13) zwischen einer Lösestellung und einer Spannstellung die äußere Mantelfläche der Spannhülse (13) mit den darin gelagerten Kugeln (21) entlang der inneren Mantelfläche der Spindelhülse (15) geführt sind.

4. Spannvorrichtung nach einem der Ansprüche 2 oder 3, **dadurch gekennzeichnet, dass** in der Spannstellung die Kugeln (21) in einer Verriegelungsstellung und unter Ausbildung eines Formschlusses am Rand der Spindelhülse (15) anliegen.

5. Spannvorrichtung nach Anspruch 4, **dadurch gekennzeichnet, dass** eine mittels der Antriebseinheit (3) axial bewegbare Buchse (9) vorgesehen ist, wobei durch die Bewegung der Buchse (9) die Spannhülse (13) mitbewegt wird, und wobei in der Spannstellung die Buchse (9) die Kugeln (21) in die Verriegelungsstellung drückt.

6. Spannvorrichtung nach Anspruch 5, **dadurch gekennzeichnet, dass** in der Spannstellung die Position der Buchse (9) durch die Federkraft einer Druckfeder (11) gesichert ist.

7. Spannvorrichtung nach Anspruch 6, **dadurch gekennzeichnet, dass** bei Lösen aus der Spannstellung die Buchse (9) mittels der Antriebseinheit (3) in axialer Richtung gegen die Federkraft der Druckfeder (11) verfahren wird, wodurch die Kugeln (21) aus ihrer Verriegelungsstellung freigegeben werden.

8. Spannvorrichtung nach einem der Ansprüche 2 bis 7, **dadurch gekennzeichnet, dass** mit der Spannhülse (13) eine Spannzange (16) betätigt wird, wobei in der Spannstellung die Spannzange (16) geschlossen ist und dadurch das Werkzeug (19) in der Spanneinheit (2) gespannt ist, und wobei in der Lösestellung die Spannzange (16) geöffnet ist und dadurch das Werkzeug (19) in der Spanneinheit (2) gelöst ist.

9. Spannvorrichtung nach Anspruch 8, **dadurch gekennzeichnet, dass** die Spannzange (16) in Eingriff mit einer Zugstange (17) ist, die in Wirkverbindung mit einer das Werkzeug (19) spannenden Spannpatrone (18) ist.

10. Spannvorrichtung nach einem der Ansprüche 2 bis 9, **dadurch gekennzeichnet, dass** der Federweg der Federanordnung (14) signifikant kleiner ist als der Hubweg der Spannhülse (13) bei deren Verfahren zwischen der Spannstellung und der Lösestellung.

11. Spannvorrichtung nach einem der Ansprüche 2 bis 10, **dadurch gekennzeichnet, dass** die Federanordnung (14) aus Tellerfedern besteht.

12. Spannvorrichtung nach einem der Ansprüche 2 bis 11, **dadurch gekennzeichnet, dass** mittels der Federanordnung (14) ein Ausgleich gegen des Verschleißen mechanischer Komponenten erfolgt.

13. Spannvorrichtung nach einem der Ansprüche 9 bis 12, **dadurch gekennzeichnet, dass** die Position der Zugstange (17) mittels eines Sensors überwacht wird.

14. Spannvorrichtung nach Anspruch 13, **dadurch gekennzeichnet, dass** der Sensor ein analoger Näherungsschalter (8) ist.
